Europäisches Patentamt

(19) European Patent Office

Office européen des brevets

(11) Numéro de publication : **0 010 007**
**B1**

(12) **FASCICULE DE BREVET EUROPÉEN**

(45) Date de publication du fascicule du brevet :
09.09.81

(21) Numéro de dépôt : **79400579.3**

(22) Date de dépôt : **20.08.79**

(51) Int. Cl.³ : **C 09 D   3/70**, B 05 D   7/16

㊴ Procédé pour isoler des fonds de peinture et son application.

(30) Priorité : **29.08.78 FR 7824910**

(43) Date de publication de la demande :
**16.04.80 (Bulletin 80/08)**

(45) Mention de la délivrance du brevet :
**09.09.81 Bulletin 81/36**

(84) Etats contractants désignés :
**AT BE CH DE GB IT LU NL SE**

(56) Documents cités :
**DE - A - 2 015 020**
**FR - A - 2 213 854**
**US - A - 3 776 782**

(73) Titulaire : **SOCIETE FRANCAISE DUCO Société anonyme**
**43, rue Victor Renelle**
**F-93240 Stains (FR)**

(72) Inventeur : **Neirynck, Albert**
**105 Parc de Cassan**
**F-95290 L'Isle-Adam (FR)**
Inventeur : **Duflos, Roger**
**6 Rue Anna de Noailles**
**F-95270 Viarmes (FR)**

(74) Mandataire : **Bressand, Georges et al**
**c/o CABINET LAVOIX 2 Place d'Estienne d'Orves**
**F-75441 Paris Cedex 09 (FR)**

EP 0 010 007 B1

Imprimerie Jouve, 17, rue du Louvre, 75001 Paris, France

Procédé pour isoler des fonds de peinture et son application

La présente invention est relative à l'isolation de fonds de peinture appliqués sur des objets ou parois divers et, en particulier, sur des carrosseries d'automobiles.

Les carrosseries des voitures sont réparées avec des peintures dont les résines sont mises en solution et diluées pour l'application avec des solvants actifs comme les hydrocarbures aromatiques, les cétones, les esters et les éthers.

Ces solvants ont, sur certains fonds de peinture d'origine comme les acryliques thermoplastiques, ou sur des fonds déjà réparés avec des laques sensibles à ces solvants, comme les glycérophtaliques modifiés aux acides gras siccatifs ou semi-siccatifs dont le séchage final est plus ou moins atteint, un effet très néfaste. On observe un gonflement irrégulier du feuil de peinture sousjacent qui rend l'aspect de la réparation inacceptable.

Il arrive assez fréquemment que le peintre réparateur en voitures constate après application que la teinte du raccord n'est pas conforme à celle du fond d'origine ou qu'il a, par maladresse, fait un défaut : maigreur, coulure... au moment de l'application. Le travail est à recommencer et il faut soit laver au solvant, soit attendre le séchage complet du revêtement, soit isoler avant de pouvoir intervenir à nouveau. Les revêtements à recouvrir contiennent parfois des pigments solubles dans les solvants usuels, (généralement des rouges, plus rarement des jaunes) qui migrent dans les peintures ultérieurement appliquées. Il en est de même des fonds souillés par des bitumes ou goudrons.

Des situations analogues peuvent se présenter pour des réparations d'objets divers peints ou de parois murales similairement souillées ou sensibles.

Pour obtenir un bon résultat d'isolation les procédés actuellement utilisés mettent en œuvre des systèmes assez élaborés demandant un temps de séchage relativement long (au minimum une demi-journée et le plus souvent du soir au lendemain) ; ils peuvent consister en l'application d'apprêts glycérophtaliques devenant parfaitement insolubles après séchage oxydant à l'air, ou d'apprêts époxy/polyamine ou époxy/polyamide, spécialement formulés, livrés en deux composants et qui ont l'inconvénient, une fois mélangés, d'avoir une vie en pot limitée.

Les produits de peinture séchant rapidement à base de résines de butyral de polyvinyle n'ont pas un caractère isolant suffisant et les sous-couches dites nitrocellulosiques ou nitrosynthétiques ont des solvants actifs qui détrempent les fonds en question.

Les isolants, à base de gomme laque ou de résines polyesters, solubilisés dans l'alcool sont assez efficaces, sèchent rapidement mais présentent un mauvais vieillissement dans le temps : craquelures, décollements.

La demande de la R.F.A. publiée DE-A-2015020 et le brevet U.S.-A 3 776 782 décrivent l'utilisation de solutions aqueuses ou alcooliques de polyamides applicables sur des surfaces métalliques nues dans le but d'améliorer la résistance à la corrosion ou de favoriser l'accrochage d'une peinture mais ces documents ne décrivent ni ne suggèrent l'utilisation de telles solutions pour l'isolation de fonds de peinture en vue de la réparation de ceux-ci, notamment sur les carrosseries d'automobiles.

L'invention a pour but de fournir un procédé permettant d'isoler un fond sensible porteur de composants solubles, migrants (goudrons, bitumes, pigments, colorants...) ou détrempable (revêtements plastiques comme les peintures d'origine des peintures anciennes ou récemment appliquées), de l'action des résines et solvants contenus dans un revêtement, généralement une peinture, appliqué sur les fonds précités et qui se traduit par le ramollissement, gonflage, variation du volume, déformation et éventuellement remontée des composants solubles, migrant dans le feuil supérieur, tout ceci conduisant à la destruction du bon aspect du nouveau revêtement.

Ce but est atteint suivant l'invention par un procédé d'isolation de fonds de peinture, en vue notamment de l'application de nouvelles couches de peinture sur ceux-ci, caractérisé en ce qu'on applique sur le fond à isoler une couche formant barrière d'une composition filmogène d'une résine de polyamide à base d'acide dicarboxylique et de diamine en solution alcoolique ou hydro-alcoolique et on laisse sécher la couche protectrice ainsi obtenue.

Une composition filmogène pour la mise en œuvre du procédé ci-dessus, est constitué d'une solution alcoolique ou hydro-alcoolique d'une résine de polyamide à base d'acide dicarboxylique et de diamine.

Suivant encore une autre caractéristique, la composition contient un colorant ou un pigment.

L'invention a également pour objet une application du procédé précité à la réparation de fonds de peinture, en particulier sur les carrosseries de véhicules, caractérisée en ce qu'on applique sur le fond à réparer une couche de la composition liquide filmogène, on laisse sécher la couche protectrice obtenue et on applique ehsuite sur celle-ci la nouvelle peinture servant à la réparation.

D'autres caractéristiques et avantages de l'invention apparaîtront à la lecture de la description qui va suivre.

Suivant l'invention on applique sur le fond de peinture à isoler une couche d'une composition filmogène à base de résine de polyamide.

Les résines utilisables sont à base d'acides dicarboxyliques et de diamines et ce sont notamment des résines de copolyamides telles qu'un copolyamide à base d'acide adipique/hexaméthylène diamine et de caprolactame, un copolyamide ternaire d'hexaméthylène diamine/acide adipique, p, p'-diamino-dicyclohexylméthane/acide adipique et caprolactame, un copolyamide ternaire 6/6, 6/12 de caprolactame, d'acide adipique/hexaméthylène diamine et de lauryllactame ou un copolyamide ternaire 6/6, 12/12 de caprolactame, d'acide dodécanedioïque/hexaméthylène diamine et de lauryllactame.

Dans la composition filmogène de l'invention, les résines de polyamides sont en solution dans des alcools ou, de préférence, dans des mélanges eau-alcool. La concentration de la résine dans la solution dépend de la nature de la résine et de la viscosité désirée pour la composition.

A titre d'alcools utilisables comme solvants, on citera notamment l'alcool éthylique, l'alcool méthylique, l'alcool n-propylique, l'alcool n-butylique, etc... et leurs mélanges.

La limite d'emploi de certaines résines peut se situer au niveau de la formation d'un épaississement de la solution sous la forme d'un gel à température ambiante. Ces solutions redeviennent limpides et fluides en les chauffant vers 50 °C environ mais cela peut en gêner l'utilisation, et le choix de la résine sera fait en fonction des conditions d'utilisation. Ce phénomène ne serait effectivement pas gênant dans le cas du « pistolage à chaud ».

La stabilité à froid des solutions peut être améliorée par l'addition d'un plastifiant en une quantité pouvant aller jusqu'à 40 % du poids de la résine. A titre de plastifiant approprié, on citera par exemple le butylamide de l'acide benzène-sulfonique et le p.hydroxybenzoate d'éthyl-2 hexyle.

On peut aussi obtenir une meilleure stabilité en remplaçant jusqu'à la moitié de la quantité d'alcool dans la solution par du chlorure de méthylène. On peut aussi associer les deux moyens ci-dessus.

La propriété isolante de la composition provient de l'insolubilité du copolyamide dans les autres solvants usuels des revêtements ultérieurs comme les hydrocarbures aliphatiques aromatiques, les esters, et les cétones et de leur compatibilité limitée avec les autres filmogènes utilisés dans l'industrie des peintures.

Les fonds à isoler sont généralement insensibles aux alcools ou leur mélange à l'eau.

La composition isolante peut contenir un colorant ou un pigment approprié à l'usage envisagé. N'importe quel pigment ou colorant usuel dans l'industrie des peintures peut être utilisé.

Après l'application de la couche de composition isolante sur le fond à protéger, on laisse sécher celle-ci par évaporation des solvants qu'elle contient.

Le feuil ainsi constitué peut être alors recouvert par les peintures habituelles désirées pour la suite des opérations. Cette application peut être par exemple effectuée après un séchage de la couche isolante pendant 30 minutes à l'air libre à une température de 20 °C environ.

Par ce moyen, l'invention met à la disposition du peintre un procédé simple d'isolation, la couche isolante obtenue séchant rapidement ce qui lui permet de poursuivre avec célérité et sécurité les opérations suivantes du processus.

Les résines de copolyamides utilisables dans la présente invention se trouvent sur le marché commercial et sont habituellement destinées à d'autres usages comme les thermocolles (en particulier pour les tissus), les revêtements de fils métalliques, d'intérieurs d'emballages métalliques en tôle ou comme vernis de finition sur des simili-cuirs. On peut trouver de telles résines sous les marques commerciales « ULTRAMID » (BASF) et « VESTAMID T » (HÜLS).

On donnera ci-après, à titre illustratif et non limitatif, quelques exemples de compositions d'isolation suivant l'invention.

Exemple 1 : Composition isolante incolore

1) Mise en solution de la résine :

On verse la résine en poudre dans le mélange des solvants portés à 60 °C dans un mélangeur relié à un réfrigérant à reflux. La solution a la composition suivante :

| | |
|---|---|
| Résine de copolyamide Ultramid 1 C (BASF) .............. | 15 % en poids |
| Alcool éthylique à 95 % ......... | 65 % en poids |
| Eau ........................................... | 20 % en poids |
| | 100 % |

2) Préparation de la composition isolante incolore :

On prépare le mélange suivant qui est alors prêt à l'emploi :

| | |
|---|---|
| Solution de résine à 15 % obtenu sous 1) ........................ | 50 % en poids |
| Alcool éthylique à 95 % ......... | 30 % en poids |
| Alcool méthylique .................... | 10 % en poids |
| Alcool n-butylique .................... | 10 % en poids |
| | 100 % |

Exemple 2 : Composition isolante pigmentée

Dans un broyeur à boulets on charge les constituants suivants en parties en poids :

| | |
|---|---|
| Solution de résine à 15 % de l'exemple 1 ............................................. | 20 |
| Oxyde de titane ............................................. | 7 |
| Talc ................................................................. | 5 |
| Sulfate de baryum ......................................... | 8 |

On disperse pendant 16 heures pour obtenir une finesse de grains de 20μ. On vide le broyeur et on le rince en plusieurs fois avec :

| | |
|---|---|
| Alcool éthylique ............. | 20 parties en poids |

On rassemble ce qui descend du broyeur dans un mélangeur et on y ajoute :

| | |
|---|---|
| Solution de résine à 15 % de l'exemple 1 .............. | 22 parties en poids |
| Alcool n-propylique ....... | 18 parties en poids |

On obtient ainsi une composition pigmentée ayant un remarquable pouvoir isolant et supportant parfaitement des applications ultérieures de peintures. Elle est particulièrement appropriée à la réparation de carrosseries de voitures.

## Exemple 3

On prépare une composition isolante pigmentée comme à l'exemple 2 sauf que la solution de résine à 15 % contient 70 % d'alcool éthylique à 95 % et 15 % d'eau.

## Exemple 4

On prépare une composition isolante pigmentée comme à l'exemple 2 sauf que la solution de résine à 15 % contient 60 % d'alcool éthylique à 95 % et 25 % d'eau.

## Exemple 5

On prépare une composition isolante pigmentée comme à l'exemple 2 mais, pour en améliorer la conservation, on lui ajoute 10 % du poids de la résine de butylamide de l'acide benzène-sulfonique.

## Exemple 6

On prépare une composition isolante pigmentée comme à l'exemple 2 mais, pour en améliorer la conservation, on lui ajoute 20 % du poids de la résine de p.hydroxybenzoate d'éthyl-2 hexyle.

## Exemple 7

On prépare une composition isolante pigmentée comme à l'exemple 2 mais, pour en améliorer la conservation, on remplace 1/3 du volume total des alcools présents par du chlorure de méthylène.

## Revendications

1. Procédé d'isolation de fonds de peinture, en vue notamment de l'application de nouvelles couches de peinture sur ceux-ci, caractérisé en ce qu'on applique sur le fond à isoler une couche formant barrière d'une composition filmogène d'une résine de polyamide à base d'acide dicarboxylique et de diamine en solution alcoolique ou hydro-alcoolique et on laisse sécher la couche protectrice ainsi obtenue.

2. Procédé suivant la revendication 1, caractérisé en ce que la résine de polyamide est une résine de copolyamide.

3. Procédé suivant la revendication 2, caractérisé en ce que le copolyamide est un copolyamide à base d'acide adipique/hexaméthylène diamine et de caprolactame, un copolyamide ternaire d'hexaméthylène diamine/acide adipique, p, p'-diamino-dicyclohexylméthane/acide adipique et caprolactame, un copolyamide ternaire 6/6, 6/12 de caprolactame, d'acide adipique/hexaméthylène diamine et de lauryllactame ou un copolyamide ternaire 6/6, 12/12 de caprolactame, d'acide dodécanedioïque/hexaméthylène diamine et de lauryllactame.

4. Procédé suivant l'une quelconque des revendications 1 à 3, caractérisé en ce que l'alcool est l'alcool méthylique, l'alcool éthylique, l'alcool n-propylique ou l'alcool n-butylique ou un mélange de ceux-ci.

5. Procédé suivant l'une quelconque des revendications 1 à 4, caractérisé en ce que la composition contient un pigment ou un colorant.

6. Procédé suivant l'une quelconque des revendications 1 à 5, caractérisé en ce que la composition contient en outre un plastifiant en une quantité représentant jusqu'à 40 % du poids de la résine.

7. Procédé suivant l'une quelconque des revendications 1 à 6, caractérisé en ce que jusqu'à 50 % de l'alcool sont remplacés par du chlorure de méthylène.

8. Application du procédé suivant la revendication 1 à la réparation de fonds de peinture, en particulier sur les carrosseries de véhicules, caractérisée en ce qu'on applique sur le fond à réparer une couche de la composition liquide filmogène, on laisse sécher la couche protectrice obtenue et on applique ensuite sur celle-ci la nouvelle peinture servant à la réparation.

## Claims

1. Process for the insulation of original paint layers, particularly for the application of new paint layers thereover, characterized by applying on the original paint to be insulated a barrier layer of a film-forming dicarboxylic acid- and diamine-based polyamide resin in alcoholic or water-alcohol solutions, and allowing the resulting protective coating to dry.

2. Process as claimed in claim 1, characterized in that the polyamide resin is a copolyamide resin.

3. Process as claimed in claim 2, characterized in that the copolyamide is an adipic acid/hexamethylene diamine and caprolactam copolyamide, a ternary hexamethylene diamine/adipic acid, p, p'-diaminodicyclohexylmethane/adipic acid and caprolactam copolyamide, a ternary 6/6, 6/12 caprolactam, adipic acid/hexamethylene diamine and lauryllactam copolyamide, or a ternary 6/6, 12/12 caprolactam, dodecanedioic acid/hexamethylene diamine and lauryllactam copolyamide.

4. Process as claimed in any one of the claims 1 to 3, characterized in that said alcohol is methyl alcohol, ethyl alcohol, n-propyl alcohol, n-butyl alcohol or a mixture thereof.

5. Process as claimed in any one of the claims 1 to 4, characterized in that the composition contains a pigment or a die.

6. Process as claimed in any one of the claims 1 to 5, characterized in that the composition further contains a plasticizer in an amount of up to 40wt % with respect to the weight of the resin.

7. Process as claimed in any one of the claims 1 to 6, characterized in that up to 50 % of the alcohol are substituted with methylene chloride.

8. Application of the process of claim 1 to the repair of original paint layers, particularly on vehicle bodies, characterized by applying on the original paint to be repaired a layer of the liquid film-forming composition, allowing the resulting protective layer to dry, and then applying thereon the new paint used for the repair.

**Ansprüche**

1. Verfahren zur Isolierung eines Malgrundes, insbesondere hinsichtlich des Auftrags von neuen Farbschichten auf einen Malgrund, dadurch gekennzeichnet, daß man auf den zu isolierenden Malgrund eine Sperrschicht aus einer filmbildenden Zusammensetzung aufbringt, die aus einem Polyamidharz auf Dicarbonsäure- und Diaminbasis in alkoholischer oder wässrigalkoholischer Lösung besteht, und daß man die auf diese Weise erhaltene Schutzschicht trocknen läßt.

2. Verfahren nach Anspruch 1, dadurch gekennzeichnet, daß das Polyamidharz ein Copolyamidharz ist.

3. Verfahren nach Anspruch 2, dadurch gekennzeichnet, daß das Copolyamid ein Copolyamid auf der Basis von Adipinsäure/Hexamethylendiamin und Caprolactam, ein ternäres Copolyamid aus Hexamethylendiamin/Adipinsäure, p, p'-Diaminodicyclohexylmethan/Adipinsäure und Caprolactam, ein ternäres Copolyamid 6/6, 6/12 Caprolactam, Adipinsäure/Hexamethylendiamin und Lauryllactam oder ein ternäres Copolyamid 6/6, 12/12 Caprolactam, Dodecandicarbonsäure/Hexamethylendiamin und Lauryllactam ist.

4. Verfahren nach einem der Ansprüche 1 bis 3, dadurch gekennzeichnet, daß der Alkohol Methyl-alkohol, Athylalkohol, n-Propylalkohol oder n-Buthylalkohol oder deren Mischungen ist.

5. Verfahren nach einem der Ansprüche 1 bis 4, dadurch gekennzeichnet, daß die Zusammensetzung ein Pigment oder einen Farbstoff enthält.

6. Verfahren nach einem der Ansprüche 1 bis 5, dadurch gekennzeichnet, daß die Zusammensetzung zusätzlich ein Plastifizierungsmittel oder Weichmacher in Mengen bis zu 40 Gewichtsprozent, bezogen auf das Harz, enthält.

7. Verfahren nach einem der Ansprüche 1 bis 6, dadurch gekennzeichnet, daß bis zu 50 % des Alkohols durch Methylenchlorid ersetzt sind.

8. Anwendung des Verfahrens gemäß Anspruch 1 zur Ausbesserung eines Malgrundes, insbesondere auf Fahrzeugkarosserien, dadurch gekennzeichnet, daß man auf den auszubessernden Malgrund eine Schicht der flüssigen filmbildenden Zusammensetzung aufträgt, die erhaltene Schutzschicht trocknet und dann zur Ausbesserung auf diese die neue Farbe aufträgt.